# EUROPEAN PATENT APPLICATION

(11) **EP 4 524 385 A2**
(43) Date of publication of application: **19.03.2025**
(21) Application number: 25154669.3
(22) Date of filing: 14.05.2021
(51) Int. Cl.: F02C 7/08

(54) **HEAT EXCHANGER SYSTEM**

(30) Priority: 29.06.2020 US 202063045675 P; 29.06.2020 US 202063045721 P; 29.06.2020 US 202063045697 P; 29.06.2020 US 202063045743 P
(62) Divisional of application: 21833636.0
(71) Applicant: Lummus Technology LLC, Bloomfield, NJ 07003 (US)
(72) Inventor: JIBB, Richard John, Bloomfield, NJ, 07003-3096 (US); GUYMON, David, Bloomfield, NJ, 07003-3096 (US); HERBANEK, Ron, Bloomfield, NJ, 07003-3096 (US); BRIGNONE, Vincenzo Marco, Bloomfield, NJ, 07003-3096 (US); GROPPI, Roberto, Bloomfield, NJ, 07003-3096 (US)
(74) Representative: Hoffmann Eitle

(57) **Abstract**

A system may include a turbine and a recuperative heat exchanger system. The recuperative heat exchanger system is configured to receive exhaust gases from the turbine. The recuperative heat exchanger system may include a precool section to cool the exhaust gases, a major heating section to receive the cooled the exhaust gases, and a minor heating section to receive the cooled the exhaust gases.

## Description

### BACKGROUND

Thermal power cycles typically use either air breathing gas turbine direct fired Brayton Cycle or indirectly heated closed Rankine Cycle with steam as a working fluid. High efficiencies are obtained by combining the Brayton cycle with a bottoming Rankine Cycle to form a combined cycle. Whilst combined cycle power generation may achieve high efficiency, combined cycle power generation is not suitable for CO2 capture, and the installation can have high capital cost due to the large amount of equipment and pipe work required. In some case, a Supercritical CO2 (SCCO2) Brayton thermal power cycle may be used over the thermal power cycles. Advantageously, Supercritical CO2 (SCCO2) Brayton thermal power cycle may have reduced Greenhouse Gas (GHG) emissions, improved carbon capture, higher efficiency, reduced footprint and lower water consumption. However, there are several technical challenges that must be overcome before the benefits of Supercritical CO2 (SCCO2) Brayton thermal power cycle may be realized. In particular, the design and operation of recuperative heat exchangers for these Supercritical CO2 (SCCO2) Brayton thermal power cycles are an ongoing area of research and development.

A semi-closed direct fired oxy-fuel Brayton cycle may be called an Allam Power Cycle or Allam Cycle. The Allam Cycle is a process for converting fossil fuels into mechanical power, while capturing the generated carbon dioxide and water. Conventionally, the Allam Cycle requires an economizer heat exchanger and an additional low-grade external heat source to achieve high efficiency comparable to existing combined cycle-based technology, with the crucial added benefit of CO2 capture for use or storage. The efficiency of the Allam Cycle is increased if the turbine is operated at higher temperatures typically above 600 °C and at high pressure of 120 to 400 bar. These conditions lead to the simultaneous requirements of high-pressure high temperature and high effectiveness for the heat exchange system. Typically, multiple individual heat exchange units are required, and must be arranged in a network to achieve the required recuperative heat exchange simultaneously with heat recovery from the external low-grade heat source. Examples of conventional heat exchanger systems and methods may be found in U.S. Pat. No. 8,272,429; U.S. Pat. No. 8,596,075; U.S. Pat. No. 8,959,887; U.S. Pat. No. 10,018,115; U.S. Pat. No. 10,422,252; and U.S. Pat. Pub. No. 2019/0063319.

Conventionally, heat exchanger systems may be split into high, medium and low temperature sections. Whilst it is desirable to cool the exhaust gas in the high temperature section to the lowest temperature (for instance a temperature coincident with the low grade heat source temperature), this is in conflict with the mechanical requirements that drive the layout, cost and reliability of such a system. Typically, the design temperature and pressure of the high temperature section are set by the highest temperature and pressure which in turn drives the mechanical requirements.

### SUMMARY

These objects above are resolved by means of a system according to independent claim 1 and/or a system according to independent claim 10. Distinct embodiments are derivable from the dependent claims.

Other aspects and advantages of the invention will be apparent from the following description and the appended claims.

### BRIEF DESCRIPTION OF DRAWINGS

Figures 1A and 1B illustrate a schematic view of a power generation system in accordance with one or more embodiments of the present disclosure.
Figure 2 illustrates a schematic view of a recuperative heat exchanger system in accordance with one or more embodiments of the present disclosure.
Figure 3 is a cross-sectional view of a precool heat exchanger in accordance with one or more embodiments of the present disclosure.
Figures 4A and 4B illustrate a perspective view of a recuperative heat exchanger system in accordance with one or more embodiments of the present disclosure.
Figure 4C is a side view of the recuperative heat exchanger system of Figures 4A and 4B in accordance with one or more embodiments of the present disclosure.
Figure 4D is a top view of the recuperative heat exchanger system of Figures 4A and 4B in accordance with one or more embodiments of the present disclosure.
Figure 5A is a side view of a heat exchanger system in accordance with one or more embodiments of the present disclosure.
Figure 5B is a side view of a heat exchanger hanger system of Figure 5A in accordance with one or more embodiments of the present disclosure.
Figures 6-9 are side views of a heat exchanger system in accordance with one or more alternative embodiments of Figure 5A.

### DETAILED DESCRIPTION

Embodiments of the present disclosure are described below in detail with reference to the accompanying figures. Like elements in the various figures may be denoted by like reference numerals for consistency. Further, in the following detailed description, numerous specific details are set forth in order to provide a more thorough understanding of the claimed subject matter. However, it will be apparent to one having ordinary skill in the art that the embodiments described may be practiced without these specific details. In other instances, well-known features have not been described in detail to avoid unnecessarily complicating the description. As used herein, the term "coupled" or "coupled to" or "connected" or "connected to" may indicate establishing either a direct or indirect connection and is not limited to either unless expressly referenced as such. As used herein, fluids may refer to slurries, liquids, gases, and/or mixtures thereof. Wherever possible, like or identical reference numerals are used in the figures to identify common or the same elements. The figures are not necessarily to scale, and certain features and certain views of the figures may be shown exaggerated in scale for purposes of clarification.

In one aspect, embodiments disclosed herein relate to a power generation system for electricity generation, petrochemical plants, waste heat recovery, and other industrial applications. The power generation system may also be interchangeably referred to as a recuperative heat exchanger system as a network or assembly of heat exchangers in the present disclosure. Additionally, the recuperative heat exchanger system may incorporate a precooling section to reduce turbine exhaust gas temperature. The recuperative heat exchanger system may minimize life cycle cost of heat exchangers that are critical to efficient recuperative thermal energy exchange at high pressure and with high thermal effectiveness. In some embodiments, the recuperative heat exchanger system may be used for Supercritical Carbon Dioxide (SCCO2) power cycles, such as an Allam cycle.

In another aspect, embodiments disclosed herein relate to a recuperative heat exchanger system for electricity generation, petrochemical plants, waste heat recovery, and other industrial applications. The recuperative heat exchanger system may also be interchangeably referred to as a network or assembly of heat exchangers in the present disclosure. Additionally, the recuperative heat exchanger system may incorporate a precooling section to reduce turbine exhaust gas temperature. The recuperative heat exchanger system may minimize life cycle cost of heat exchangers that are critical to efficient recuperative thermal energy exchange at high pressure and with high thermal effectiveness. In some embodiments, the recuperative heat exchanger system may be used for Supercritical Carbon Dioxide (SCCO2) power cycles, such as an Allam cycle.

In yet another aspect, embodiments disclosed herein relate to a heat exchanger system for electricity generation, petrochemical plants, waste heat recovery, and other industrial applications. The heat exchanger system may also be interchangeably referred to as a network or assembly of heat exchangers in the present disclosure. Additionally, the heat exchanger system may incorporate a heat exchanger hanger system to minimize expansion stresses arising from thermal expansion of heat exchangers and interconnecting pipework. The heat exchanger hanger system may minimize life cycle cost of heat exchangers that are critical to efficient recuperative thermal energy exchange at high pressure and with high thermal effectiveness. In some embodiments, the heat exchanger hanger system may be used for Supercritical Carbon Dioxide (SCCO2) power cycles, such as an Allam cycle.

Recuperative heat exchanger systems, according to embodiments herein, may include a combination of Printed Circuit type (PCHE) and Shell and Tube type (STHE) heat exchangers. For example, the recuperative heat exchanger system may include a precool section, a major heating section (recycle heating), and a minor heating section (oxidant heating). In some embodiments, a heat recovery section may be optionally connected to the major heating section and/or the minor heating section.

In one or more embodiments, the recuperative heat exchanger system may use a heat exchanger network that incorporates parallel sections for heating of a minor portion of a high-pressure gas and a major portion of the high-pressure gas. The minor portion may consist of the oxygen containing CO2 (Oxidant) and the major portion may consist of the balance of the recirculated CO2 (Recycle CO2). The two parallel sections may have substantially different temperature profiles. In a non-limiting example, the major portion (about 75% of a total flow, in a range 51-90%) may be heated to a lower temperature than the minor portion. The minor portion may be first heated to an intermediate temperature of approximately 440 °C (in a range of 350-550 °C) before being used to precool the entire high temperature exhaust stream from a high temperature approximate 600°C (in a range of 550-850 °C) to a temperature low enough to avoid a significant mechanical design constraint, and in particular to a temperature below 575 °C. The 575 °C limit may represent a mechanical design constraint when diffusion bonded PCHE are employed and are fabricated from austenitic stainless steel and in particular alloy 316/316L. PCHE alloy 316 blocks may require allowable stresses that are determined from time dependent (creep) properties at temperatures above 575°C. Further, a heat recovery section may be provided in the recuperative heat exchanger system. The heat recovery section may add heat at a temperature below the combustion temperature, e.g. low-grade heat.

Conventional power generation systems in industrial applications are typically exceptionally large and heavy. Conventional power generation systems may include an extensive layout and arrangement of pipes that require a large space and weigh several tons each. In some instances, large heat exchangers connected in series and may include complicated bends or changes in orientation. Additionally, large manifolds are needed to introduce fluids into the heat exchanges as well as when the fluids exit the heat exchanges. Such power generation systems may be both heavier in weight and may also be more expensive to manufacture because of the higher number of parts and components. For example, stress loops are used to accommodate an expansion of the pipework within the system. This additional pipework of stress loops needed to connect the various manifolds and heat exchangers together adds to the weight, installation costs, and overall cost of power generation systems.

Accordingly, one or more embodiments in the present disclosure may be used to overcome such challenges as well as provide additional advantages over conventional power generation systems, as will be apparent to one of ordinary skill. In one or more embodiments, a recuperative heat exchanger system may be lighter in weight and lower in cost as compared with conventional power generation systems due, in part, minimizing creep fatigue/damage, independent oxidant and recycle sections such that exhaust fluid flow split may be controlled with one or more low temperature valves, and exhaust fluid leaving the turbine does not require a balancing vessel to be placed between the turbine and recuperative heat exchanger. Additionally, the recuperative heat exchanger system may increase reliability and performance for thousands of hours where some components of the recuperative heat exchanger system are subject to high pressures, high temperatures and cycles of operation. Overall, the recuperative heat exchanger system may minimize product engineering, risk associated with flow loops manufacture, reduction of assembly time, hardware cost reduction, and weight and envelope reduction.

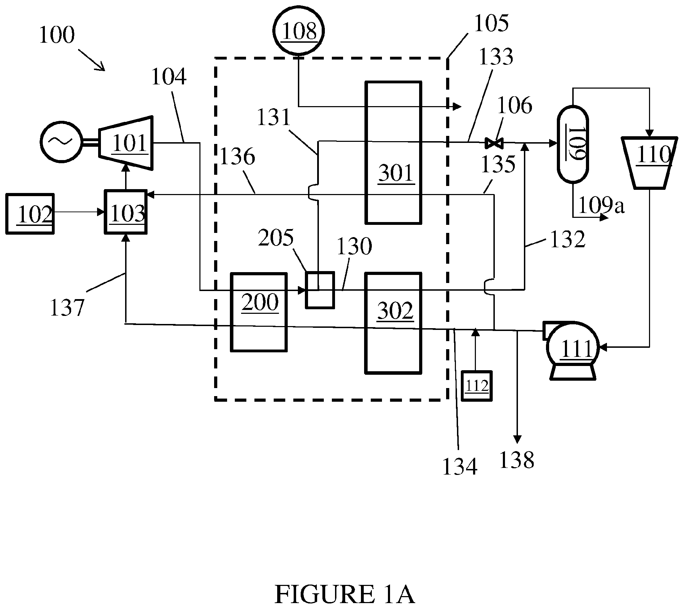

Turning to Figure 1A, Figure 1A shows a schematic view of a power generation system 100 in accordance with one or more embodiments of the present disclosure. In one or more embodiments, a turbine 101 may be powered by fuel source 102 via a combustor 103. As known in the art, a turbine, such as the turbine 101 may be a structure useful for extracting energy from a fluid flow and converting the fluid flow into useful work, such as to drive a generator to produce electricity, and is often a rotary device with other components (i.e., rotor, stator, and/or turbine blades) having various functions relevant to producing or converting mechanical energy. It is noted that the turbine 101 in one or more embodiments may be configured as a gas or steam turbine. The combustor 103 may be a component of the turbine 101 where combustion takes place, such as a chamber. Additionally, an oxygen supply 112 may be provided to feed oxygen into the combustor 103. As known to those of ordinary skill in the art, the turbine 101 may produce exhaust gases 104. The exhaust gases 104 may be fed into a recuperative heat exchanger system 105 (see dotted square) to form a turbine exhaust gas stream.

In one or more embodiments, the recuperative heat exchanger system 105 may include a precool section 200, a major heating section 301, and a minor heating section 302. In some embodiments, the major heating section 301 may be a recycle heating section and the minor heating section 302 may be an oxidant heating section. The precool section 200 may be high-temperature pre-coolers having shell and tube type construction wherein the shell that may be combined with an annular distributor. Both the major section 301 and the minor section 302 may include at least two heat exchangers vertically stacked on top of each other to form a vertically modular heat exchanger stack.

Still referring to Figure 1A, all the exhaust gas 104 leaving the turbine may be fed into the precool section 200. The precool section 200 may cool the exhaust gas 104 against a minor portion of a high-pressure gas to be heated, and preferably against an oxidant stream before redistribution to independent parallel trains (e.g., the major section 301 and the minor section 302). In this way, the exhaust gas 104 may be directly cooled prior to entering the major section 301 and the minor section 302, with a significant saving in cost and increase in reliability. Additionally, a manifold 205 may be optionally used to split the cooled exhaust gas 104 into streams entering the major section 301 and the minor section 302. The cooled exhaust gas 104 may split to a major flow path 131 feeding into the major section 301 and a minor flow path 130 feeding into the minor section 302. Further, one or more valves 106 may be used to balance a split of the exhaust gas flow 104 flowing from the major section 301 and into the minor section 302. Further, flow resistances may be provided in both the major section 301 and the minor section 302 to balance the flow of the exhaust gas 104. Furthermore, a flow may exit the major section 301 via flow lines 133 while a flow may exit the minor section 302 via flow lines 132. In some embodiments, one or more valves 106 may be provided on the flow lines 132.

In some embodiments, heat recovery systems may be operationally coupled to the recuperative heat exchanger system 105. The heat recovery systems may add heat at a temperature below the combustion temperature. Further examples of the heat recovery systems include, but are not limited to, directly or indirectly adding heat (via a low-grade heat source 108) to the turbine exhaust gas stream, recovering heat from an Air Separation Unit (ASU) coupled to a compressor (not illustrated), or recovering heat from a recycle gas compressor discharge from the compressor (not illustrated). In a non-limiting example, a flow line 134 from a pump 111 may feed into the minor section 302 while a flow line 135 from the pump 111 may feed into the major section 301. In addition, a separator 109 may separate liquid condensate from exhaust gas such that liquid condensates 109a may be collected. Further, a compressor 110 may be coupled to the separator 109. Additionally, from the pump 111, a discharge flow line 138 may be provided for product Carbon Dioxide (CO2) to exit the power generation system 100. In some embodiments, the heat recovery systems may be incorporated into the major section 301. It is further envisioned that a series of manifolds within the recycle and heat recovery sections may be used to redistribute the recycled high-pressure carbon dioxide and to provide draw points for the various turbine cooling flows that may be required. Further, a first flow back line 136 from the major section 301 and a second flow back line 137 from the minor section 302 may be used to provide the combustor 103 with fluid flow from the major section 301 and the minor section 302.

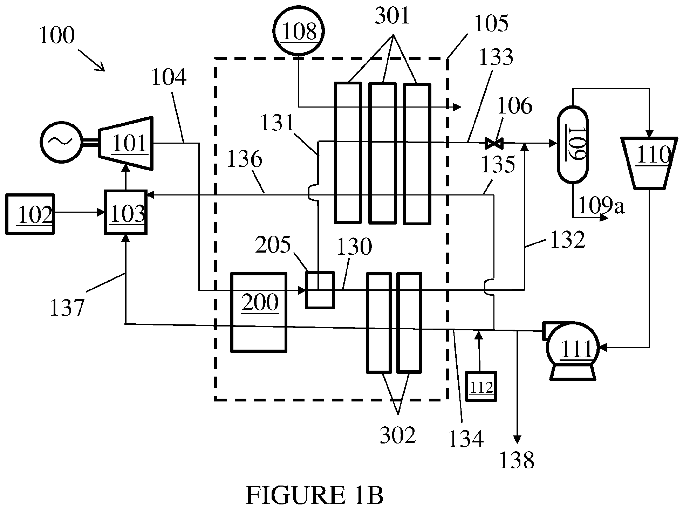

Referring now to Figure 1B, another embodiment of a power generation system 100 according to embodiments herein is illustrated, where like numerals represent like parts. The embodiment of Figure 1B is similar to that of the embodiment of Figure 1A. However, in place of just one heat exchanger, the major section 301 and the minor section 302 may both include two or more vertically modular heat exchanger stacks in series. The PCHE blocks may have a maximum size based on a plate size that can be accommodated within a diffusion bonding furnace, and thus, it may be beneficial to have more than one vertically modular heat exchanger stack. In some embodiments, there may be a need to re-distribute the high-pressure stream between the major section 301 and the heat recovery section, and thus, it may be beneficial to have more than one vertically modular heat exchanger stack.

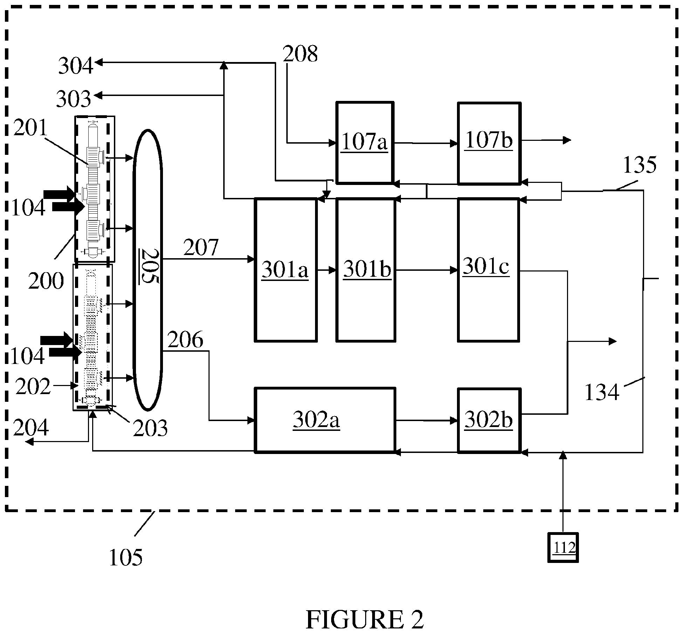

Figure 2 illustrates a close-up schematic view of a recuperative heat exchanger system 105 according to embodiments herein is illustrated, where like numerals represent like parts. As shown by arrows 104, exhaust gas leaving a turbine may enter a precool section 200 via one or more transfer pipes. In a non-limiting example, four nominally identical transfer pipes may be used to transfer the exhaust gas (arrows 104) to the precool section 200. It is noted that any number of transfer pipes may be used without departing from the scope of the present disclosure.

In one or more embodiments, the precool section 200 may include one or more shell and tube heat exchangers ("STHE") 201. The STHE 201 of the precool section 200 may be made from a material selected from an Inconel material (e.g. Alloy 625 or alloy 617) or a similar material that is not subject to time dependent properties at a highest temperature. The one or more transfer pipes may be connected a shell-side 202 of the STHE 201. In a non-limiting example, each STHE 201 may have one transfer pipe connected thereof. On a tube-side 203 of the STHE 201, the STHE 201 may receive a fluid flow (e.g., oxidant fluid) from a minor section (302a, 302b). In some embodiments, a mass heat capacity (e.g., mass flow x specific heat capacity) of a tube-side fluid of the STHE 201 may be lower than the mass heat capacity of the exhaust gas (arrows 104) entering the STHE 201 on the shell-side 202. Based on the lower mass heat capacity of an oxidant fluid on the tube-side, a temperature change of the exhaust gas may be small (e.g., 15 - 50°C) whilst a temperature change of an oxidant stream may be large (e.g., 100 - 200 °C). It is further envisioned that the STHE 201 may include a heated oxidant outlet 204 for the oxidant stream to exit. From the STHE 201, the exhaust gas may enter a manifold 205 to split the exhaust gas flow.

In some embodiments, the manifold 205 may split the exhaust gas along various flow paths. In a non-limiting example, the manifold 205 splits the exhaust gas into two flow paths such as an exhaust gas minor stream 206 and an exhaust gas major stream 207.

In the exhaust gas minor stream 206, the exhaust gas flows through the minor section having a first minor heat exchanger 302a and a second minor heat exchanger 302b. Both the first minor heat exchanger 302a and the second minor heat exchanger 302b may be a printed circuit type heat exchanger ("PCHE"), a coil wound type heat exchanger, a micro-tube heat exchanger, a diffusion bonded exchanger using stamped fins in addition to etched plates or any other type heat exchanger. In addition, both the first minor heat exchanger 302a and the second minor heat exchanger 302b may be constructed from a suitable material, such as of dual certified stainless steel 316/316L. Additionally, the first minor heat exchanger 302a may be operated at a higher temperature than the second minor heat exchanger 302b. Further, the exhaust gas may be used to preheat the minor stream 134 to 350 - 500°C. In some embodiments, both the first minor heat exchanger 302a and the second minor heat exchanger 302b may be used for oxidant heating.

In the exhaust gas major stream 207, the exhaust gas flows through the major section having a first major heat exchanger 301a, a second major heat exchanger 301b, and a third major heat exchanger 301c. Each of the major heat exchangers 301a, 301b, 301c may be a printed circuit type heat exchanger ("PCHE"), a coil wound type heat exchanger, a micro-tube heat exchanger, a diffusion bonded exchanger using stamped fins in addition to etched plates or any other type heat exchanger. Additionally, the first major heat exchanger 301a may be operated at a highest temperature in the major section while the third major heat exchanger 301c may operate a lowest temperature in the major section. The second major heat exchanger 301b may operate at a temperature between the first major heat exchanger 301a and the third major heat exchanger 301c. In addition, each of the major heat exchangers 301a, 301b, 301c may be constructed from a material of dual certified stainless steel 316/316L. Further, the exhaust gas major stream 207 may be used to preheat the major stream 135 to 520 - 650°C. In some embodiments, each of the major heat exchangers 301a, 301b, 301c may be used for heating recycle CO2. Additionally, a second flow line 304 may be used to provide the turbine with a cooling flow. In a non-limiting example, the cooling flow may be a recycle gas leaving 107a or 301b. In some cases, a temperature of the cooling flow may not match a required turbine coolant temperature. In order to match the required turbine coolant temperature, hot gas or cold gas may be added to the cooling flow to raise or lower the temperature to match the required turbine coolant temperature. In some embodiments, the cooling flow may be a blended mixture from the recycle stream leaving 107a or 301b and the higher temperature recycle stream leaving 301a.

In some embodiments, a flow balance of the gas exhaust between the minor section (302a, 302b) and the major section (301a, 301b, 301c) may be controlled by flow resistances in the minor section (302a, 302b) and the major section (301a, 301b, 301c). In a non-limiting example, one or more valves at an outlet (i.e., a cold end) of the minor section (302a, 302b) may be used for flow balance.

In the heat recovery stream 208, recycled exhaust gas or a separate low-grade heat stream may be used to add heat at a temperature below a combustion temperature via a first recovery heat exchanger 107a and a second recovery heat exchanger 107b. In some embodiments, the recycled exhaust gas may be exhaust gas that is reheated and recycled back through the heat recovery sections 107a and 107b. Both the first recovery heat exchanger 107a and the second recovery heat exchanger 107b may be a printed circuit type heat exchanger ("PCHE"), a coil wound type heat exchanger, a micro-tube heat exchanger, a diffusion bonded exchanger using stamped fins in addition to etched plates or any other type heat exchanger. In addition, both the first recovery heat exchanger 107a and the second recovery heat exchanger 107b may be constructed from a suitable material, such as dual certified stainless steel 316/316L. Further, the first recovery heat exchanger 107a may be at a higher temperature than the second recovery heat exchanger 107b. In some embodiments, the first recovery heat exchanger 107a and the second recovery heat exchanger 107b may be integrated into the second major heat exchanger 301b and the third major heat exchanger 301c, respectively.

In one or more embodiments, the precool section 200 may cool the exhaust gas. In a non-limiting example, the exhaust gas 104 may be precooled to a temperature of 575 °C. By precooling the exhaust gas 104 to 575 °C, an available temperature difference for first major heat exchanger 301a may be reduced. This may be compensated for by using additional heat transfer surface area, or by increasing the overall heat transfer coefficient. The product of the overall heat transfer coefficient and the heat transfer surface area may be called UA which is equivalent to the heat duty divided by the mean temperature difference LMTD which may be calculated from the inlet and outlet temperatures of the hot stream and cold stream. The UA value of a heat exchanger may be related to the cost of the heat exchanger. By including the precool section 200 in the recuperative heat exchanger system 105, the required UA may increase overall by about 15%. However, a difference in cost (e.g., a value of cost/UA) between the high temperature sections and low temperature sections may lower an overall cost of the recuperative heat exchanger system 105. In a non-limiting example, the value of cost/UA of systems above 575 °C may be more than 30% higher than the value of cost/UA of systems below 575 °C. The recuperative heat exchanger system 105 may provide a lower value of cost/UA by increasing an expected life of equipment and reduced material use owing to a higher allowable stress for heat exchangers below 575 °C. Although the Inconel material of the precool section 200 may be a more expensive material, the amount of material required is relatively small because of the higher LMTD in the precool section 200, which reduces the required UA.

Embodiments herein for operating the recuperative heat exchanger system 105 may be implemented on a computing system. Any combination of mobile, desktop, server, router, switch, embedded device, or other types of hardware may be used with the recuperative heat exchanger system 105. For example, the computing system may include one or more computer processors, non-persistent storage (e.g., volatile memory, such as random access memory (RAM), cache memory), persistent storage (e.g., a hard disk, an optical drive such as a compact disk (CD) drive or digital versatile disk (DVD) drive, a flash memory, etc.), a communication interface (e.g., Bluetooth interface, infrared interface, network interface, optical interface, etc.), and numerous other elements and functionalities. It is further envisioned that software instructions in a form of computer readable program code to perform embodiments of the disclosure may be stored, in whole or in part, temporarily or permanently, on a non-transitory computer readable medium such as a CD, DVD, storage device, a diskette, a tape, flash memory, physical memory, or any other computer readable storage medium. For example, the software instructions may correspond to computer readable program code that, when executed by a processor(s), is configured to perform one or more embodiments of the disclosure.

In one or more embodiments, a precool heat exchanger may be used in recuperative heat exchanger system. The precool heat exchanger may be a shell and tube heat exchanger ("STHE") for distributing exhaust gas from a turbine. In some embodiments, instead of being a STHE, the precool heat exchanger may be a printed circuit type heat exchanger ("PCHE"), a coil wound type heat exchanger, a micro-tube heat exchanger, a diffusion bonded exchanger using stamped fins in addition to etched plates or any other type heat exchanger. The precool heat exchanger may in turn fed the exhaust gas directly into heat exchangers thereby eliminating a need for a large high temperature exhaust manifold. In a non-limiting example, the STHE may replace a large high temperature exhaust manifold such that turbine exhaust gases could be directly cooled prior to entering a minor (oxidant stream) section and a major (recycled stream) section of a recuperative heat exchanger system. In some embodiments, pressure components of the precool heat exchanger may be made from a material selected from an Inconel material (e.g. Alloy 625 or alloy 617) or a similar material that is not subject to time dependent properties at a highest temperature. Internal components of the precool heat exchanger 500, which are non-pressure parts, may be made from a stainless steel or similar materials.

In one or more embodiments, a fluid may enter at a center and split into two streams (one going right and the other left). The fluid may leave the heat exchanger through two or more separate outlets. The streams may be combined again outside the heat exchanger through a system of pipes. In some embodiments, the fluid may enter at two or more points, combine and ultimately leave in a single outlet nozzle. Large pressure drops may cause tube vibration, which may damage to the tubes and shell. Because of this, splitting the flow in the heat exchanger may be useful for reducing the risk of damage due to vibrations and may reduce the pressured drops associated with the heat exchange system.

In some embodiments, the heat exchanger may be a double-split flow exchanger. This means the heat exchanger may have two areas where the flow is divided and then reunited, as well as two support plates. When the pressure drop needs to be kept low, a split-shell design may be employed. Further, there may be no baffle plates in the split-shell design exchanger and a single support plate is installed in the center of the shell.

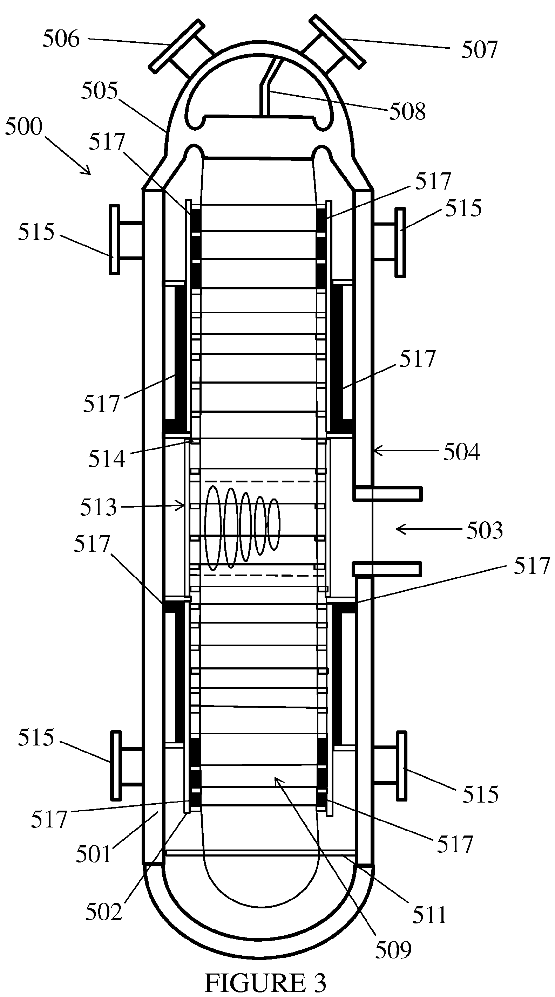

Referring to Figure 3, in one or more embodiments, Figure 3 illustrates a precool heat exchanger 500 may have two annular shells 501, 502 and a distributor section 513. A first annular shell 501 may be an outer shell forming a pressure boundary. Additionally, the first annular shell 501 may include an exhaust gas inlet 503 may be provided on a shell-side 504 to receive exhaust gases from a turbine. A transfer pipe may be connected to the exhaust gas inlet 503 from the turbine. Further, at an end of the precool heat exchanger 500, a stationary head channel 505 with an inlet 506 and an outlet 507 may be provided. A pass partition 508 may be provided within the stationary head channel 505 to split flow between the inlet 506 and the outlet 507. The inlet 506 may be used to receive oxidant from the minor section. It is further envisioned that one or more exhaust outlets 515 may be provided on the shell-side 504 for the exhaust stream to exit.

Still referring to Figure 3, a second annular shell 502 may be an inner shell or shroud around a tube bundle 509 with two or more tube-side passes. The tube bundle 509 may be a U-tube bundle. A support plate 511 is provided to support the weight of the tube bundle 509 and prevent overloading of the tube to tubesheet and channel 505 assembly connection. In some embodiments, a large difference between the shell-side 504 and a tube-side 509 flowrates mean that multiple passes may be used to maintain a reasonable tube-side 509 velocity and heat transfer coefficient. Additionally, an annular distribution device 513 may replace the function of an exhaust manifold by stepwise decelerating the exhaust gas flow and providing a controlled entrance to the tube bundle 509. The annular distribution device may be provided with slots that are rectangular or oval and with an open area that decreases with distance from the inlet 503. Further, the tube bundle 509 may have rods or grid type baffles to support the tubes and arranged on a baffle ring 514 rather than conventional segmental plate type baffles. It is further envisioned that insulation 517 may be provided within the precool heat exchanger 500 between various internal components.

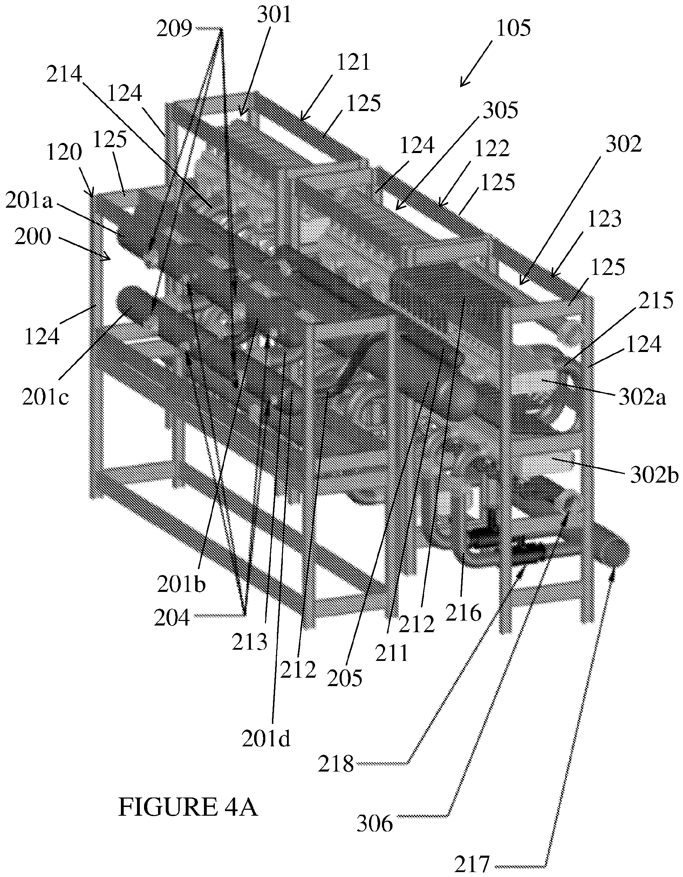

Now referring to Figure 4A, in one or more embodiments, Figure 4A illustrates a perspective view of the recuperative heat exchanger system 105. Various components of the recuperative heat exchanger system 105 may be installed in a top-down configuration within one or more rigid frameworks (120, 121, 122, 123). A top-down configuration may have an arrangement such that the components of the recuperative heat exchanger system 105 that operate at a highest temperature are positioned at a vertically upward-most position while the components of the recuperative heat exchanger system 105 that operate at a lowest temperate are positioned at a vertically downward-most position. In a non-limiting example, a precool section 200 may be within a first rigid framework 120, a first major section 301 may be within a second rigid framework 121, a second major section 305 may be within a third rigid framework 122, and a minor section 302 may be within a fourth rigid framework 123. Each of the rigid frameworks 120, 121, 122, 123 may be made from a plurality of vertically oriented structural members 124 and a plurality of horizontally oriented structural members 125. In a non-limiting example, the plurality of vertically oriented structural members 124 and the plurality of horizontally oriented structural members 125 may be interconnected together to form a rectangular frame around various components of the recuperative heat exchanger system 105. It is further envisioned that the plurality of vertically oriented structural members 124 and the plurality of horizontally oriented structural members 125 may be angled at any degree without departing from the scope of the present disclosure. The plurality of vertically oriented structural members 124 and the plurality of horizontally oriented structural members 125 may be made from a metal material such as steel, stainless steel, iron, or any other type of metal.

In some embodiments, the precool section 200 may include one or more shell and tube heat exchangers ("STHE") 201a, 201b, 201c, 201d inside the first rigid framework 120. In a non-limiting example, a first STHE 201a, a second STHE 201b, a third STHE 201c, and a fourth STHE 201d may be positioned in parallel. In addition, all four STHE 201a, 201b, 201c, 201d may operate at substantially the same temperature. It is further noted the while four STHE 201a, 201b, 201c, 201d are shown in Figure 4A, this is merely for example purposes only and any number of STHE may be used without departing from the present scope of the disclosure. All four STHE 201a, 201b, 201c, 201d may be made from a material selected from an Inconel material (e.g. Alloy 625 or alloy 617) or a similar material that is not subject to time dependent properties at a highest design operating temperature. Additionally, precooler inlets 209 may be provided on each STHE 201a, 201b, 201c, 201d to receive exhaust gases from a turbine. Each precooler inlet 209 may have a transfer pipe connected thereof from the turbine, such that a number of transfer pipes may match in ratio to a number of STHE. Further, on each STHE 201a, 201b, 201c, 201d, outlets 204 may be provided to allow for heated oxidant to exit the precool section 200.

On each STHE 201a, 201b, 201c, 201d, inlets 212 may be provided to allow for heated oxidant to enter the precool section 200 from the minor section 302. In a non-limiting example, an oxidant manifold 211 may be provided between the minor section 301 and the precool section 200. Oxidant flow lines 212 may be connected to the inlets 210 of each STHE 201a, 201b, 201c, 201d from the oxidant manifold 211 and the minor section 302. In addition, an oxidant inlet 306 may be provided in the fourth rigid framework 123 to allow oxidant flow to connect to the minor section 302. Additionally, on the tube-side, the exhaust gas exits each STHE 201a, 201b, 201c, 201d to enter a manifold 205 via flow tubes 213. The manifold 205 may be positioned outside of the one or more rigid frameworks (120, 121, 122, 123) and downstream of the precool section 200 with respect to the exhaust flow.

In some embodiments, the manifold 205 may be used to split the exhaust gas flow to the minor section 302, the first major section 301, and the second major section 305. Flow loops 214 may be used as conduit for the exhaust gas to flow from the manifold 205 to the minor section 302, the first major section 301, and the second major section 305. In a non-limiting example, the flow loops 214 may extend from the manifold 205 to individual heat exchangers (301a, 302a, 305a) with each of the minor section 302, the first major section 301, and the second major section 305.

In the minor section 302, the exhaust gas flows through the flow loops 214 to a first heat exchanger 302a and then a second heat exchanger 302b. In a non-limiting example, one or more curved flow loops 215 may be used as a conduit for the exhaust gas to flow from the first heat exchanger 302a to the second heat exchanger 302b. In addition, secondary curved flow loops 216 may be used to flow the exhaust gas from the second heat exchanger 302b to an exhaust gas manifold 217 of the recuperative heat exchanger system 105. Further, the secondary curved flow loops 216 may be provided with one or more flow balance valves 218. With the top-down configuration, the first heat exchanger 302a may be operated at a higher temperature then the second heat exchanger 302b. In one or more embodiments, the uppermost exchanger may be subject to higher temperature and therefore critical that the uppermost exchanger may be accessed for maintenance and inspection. Additionally, the uppermost heat exchanger may free to expand as far as possible without being constringed by connections to the other heat exchangers.

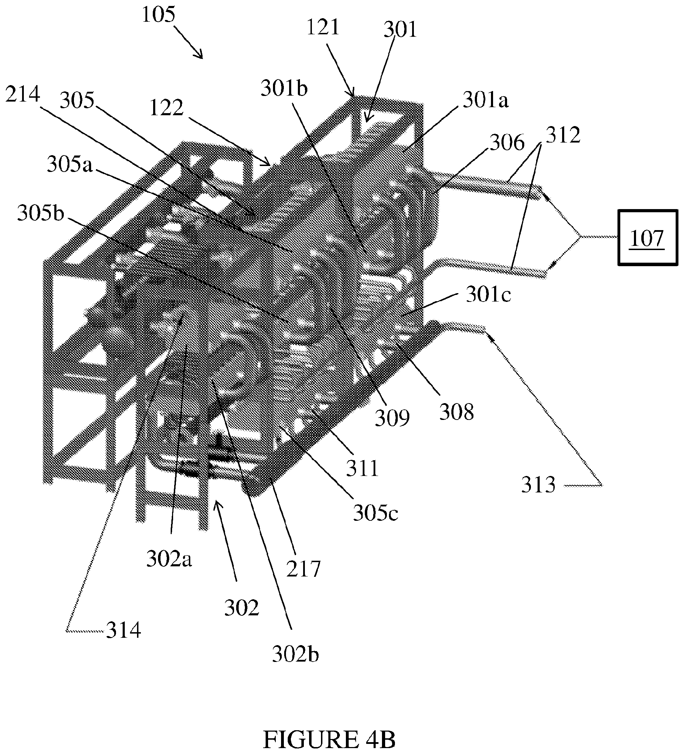

Referring to Figure 4B, in one or more embodiments, a perspective view of the recuperative heat exchanger system 105 taken from 90-degree counter-clockwise turn of Figure 2A is illustrated. In the first major section 301, the exhaust gas flows through the flow loops 214 to a first heat exchanger 301a to then flow to a second heat exchanger 301b and then to a third recycled heat exchanger 301c. In a non-limiting example, one or more curved flow loops 306 may be used as a conduit for the exhaust gas to flow from the first heat exchanger 301a to the second heat exchanger 301b. In addition, secondary curved flow loops may be used to flow the exhaust gas from the second heat exchanger 301b to the third heat exchanger 301c. Further, flow tubes 308 may be used to flow the exhaust gas to the exhaust gas manifold 217 from the third recycled heat exchanger 302c. With the top-down configuration, the first heat exchanger 301a may operate at a highest temperature while the third heat exchanger 301c may operate at a lowest temperature. The second heat exchanger 301b may operate at a temperature between the first heat exchanger 301a and the third heat exchanger 301c.

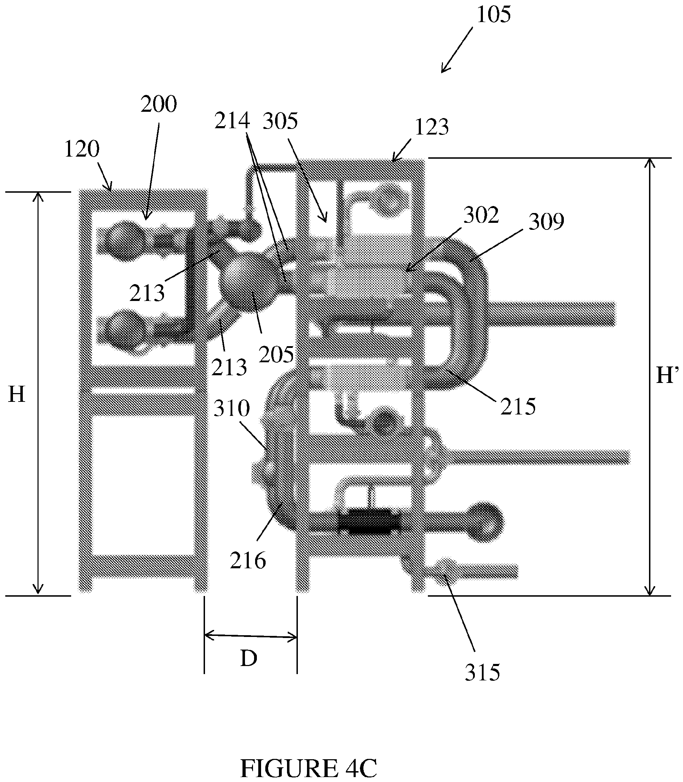

In one or more embodiments, the second major section 305 may have an arrangement identical to the first major section 302. For example, the exhaust gas flows through the flow loops 214 to a first heat exchanger 305a to then flow to a second heat exchanger 305b and then to a third heat exchanger 305c. Additionally, one or more curved flow loops 309 may be used as a conduit for the exhaust gas to flow from the first heat exchanger 305a to the second heat exchanger 305b. In addition, secondary curved flow loops (see 310 in Figure 4C) may be used to flow the exhaust gas from the second heat exchanger 305b to the third heat exchanger 305c. Further, flow tubes 311 may be used to flow the exhaust gas to the exhaust gas manifold 217 from the third heat exchanger 305c. With the top-down configuration, the first heat exchanger 305a may operate at a highest temperature while the third heat exchanger 305c may operate at a lowest temperature. The second heat exchanger 305b may operate at a temperature between the first heat exchanger 305a and the third heat exchanger 305c.

Still referring to Figure 4B, a heat recovery section 107 may be connected to the first major section 301 and the second major section 305 via heat recovery tubes 312. The heat recovery tubes 312 may be provided between the first heat exchanger 301a, 305a and the second heat exchanger 301b, 305b as well as between the second heat exchanger 301b, 305b and the third heat exchanger 301c, 305c of the first major section 301 and the second major section 305. It is further envisioned that a recycled CO2 inlet 313 may be provided at a bottom of the first major section 301 and the second major section 305. From the recycled CO2 inlet 313, recycled CO2 may travel through a recycled CO2 manifold (see 315 in Figure 2C) to be distributed to the third heat exchanger 301c, 305c, the second heat exchanger 301b, 305b and the first heat exchanger 301a, 305a to be heated and then exit through a hot recycled CO2 manifold 314.

Now referring to Figure 4C, a side view of the recuperative heat exchanger system 105 from Figures 4A and 4B is illustrated in accordance with one or more embodiments of the disclosure. As shown by Figure 4C, the first rigid framework 120 for the precool section 200 may be spaced a distance D from the second rigid framework (see 121 in Figures 4A and 4B) for the first major section (see 301 in Figures 4A and 4B), the third rigid framework (see 122 in Figures 4A and 4B) for the second major section 305, and the fourth rigid framework 123 for the minor section 302. In a non-limiting example, the manifold 205 may be positioned in the space created by the distance D between the first rigid framework 120 and the other rigid frameworks (121, 122, 123). Further, a height H of the first rigid framework 120 may be less than a height H' of the other rigid frameworks (121, 122, 123).

In one or more embodiments, the curved flow loops 215, 309 and the secondary curved flow loops 216, 310 in each of the minor section 302, the first major section (301), and the second major section 305 may have a portion that extends out of the corresponding rigid frameworks (121, 122, 123). In this configuration, the curved flow loops and the secondary curved flow loops are more flexible than linear connection and may expand with minimized restraint.

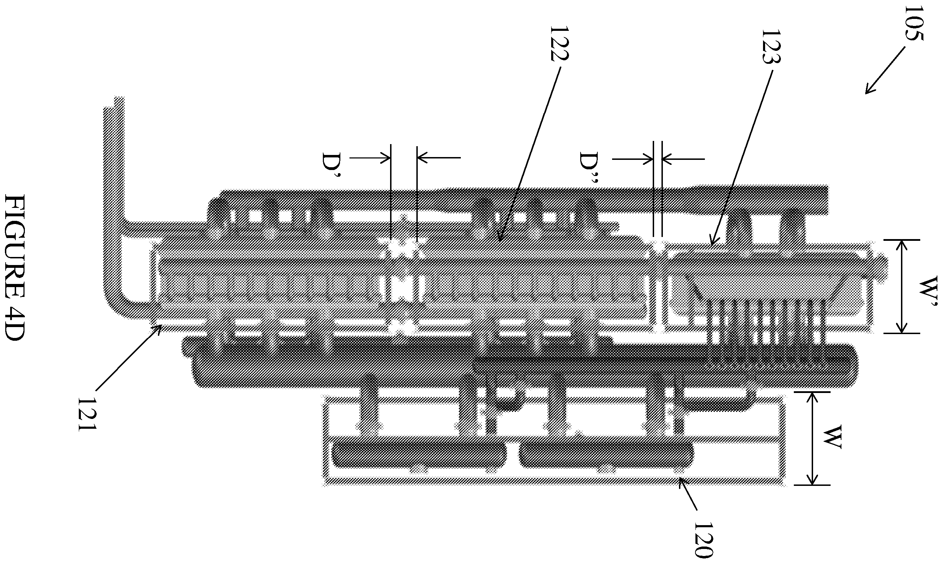

Now referring to Figure 4D, a top view of the recuperative heat exchanger system 105 from Figures 4A and 4B is illustrated in accordance with one or more embodiments of the disclosure. As shown by Figure 4D, a width W of the first rigid framework 120 may be equal to a width W' of the second rigid framework 121, the third rigid framework 122, and the fourth rigid framework 123. The second rigid framework 121 may be spaced a distance D' from the third rigid framework 122. The third rigid framework 122 may be spaced a distance D" from the fourth rigid framework 123. In a non-limiting example, the distance D' may be larger than the distance D". Figures 4C and 4D illustrate examples of how each of the rigid frameworks (120, 121, 122, 123) may have various dimensions (height and width) such that the components of the recuperative heat exchanger system 105 may be easily positioned adjacent to each other to allow for fluids connections.

As shown in Figures 4A-4D, in one or more embodiments, the various components (the precool section 200, the minor section 302, the first major section 301, and the second major section 305) of the recuperative heat exchanger system 105 having the top-down configuration may allow for a modular and compact system. By having the top-down configuration, a footprint for the recuperative heat exchanger system 105 may be much smaller than for a conventional linear system installed at grade. In a non-limiting example, the footprint for the entire recuperative heat exchanger system 105 may be around 11 feet by 14 feet. It is further envisioned that the footprint may be any dimensional size without departing from the present disclosure. Additionally, the footprint may be based on operation and transportation requirements such as special route considerations due to bridge heights and size limitations based on truck, rail, and ship lengths.

Additionally, the recuperative heat exchanger system 105 may allow for high temperature pipe to and from the turbine to not need to be run down to grade. Further each of the precool section 200, the minor section 302, the first major section 301, and the second major section 305 may be constructed in a modular and compact design to allow for easy manufacturing and shipping to the field with a minimum number of field connections. In one or more embodiments, each of the precool section 200, the minor section 302, the first major section 301, and the second major section 305 is supported within the corresponding rigid frameworks (120, 121, 122, 123) and allow for independent expansion within the corresponding rigid frameworks (120, 121, 122, 123). Since the corresponding rigid frameworks (120, 121, 122, 123) do not constrain expansion of the precool section 200, the minor section 302, the first major section 301, and the second major section 305 under thermal load, routing of connecting pipes to provide enough flexibility may be greatly simplified. This is especially important for heat exchangers that transition from a rigid block to a flexible header and nozzle assembly. It is further envisioned that, because the high temperature heat exchangers experiencing the highest thermal expansion loads may be located at the upward most position, where the modules will have the most flexibility, the high temperature heat exchangers may be the most accessible for inspection or repair. Furthermore, condensate from high temperature heat exchangers or other sections may naturally drain downward from the recuperative heat exchanger system 105.

Control systems may be provided to operate the recuperative heat exchanger system 105 locally or remotely. Embodiments herein for operating the recuperative heat exchanger system 105 may be implemented on a computing system. Any combination of mobile, desktop, server, router, switch, embedded device, or other types of hardware may be used with the recuperative heat exchanger system 105. For example, the computing system may include one or more computer processors, non-persistent storage (e.g., volatile memory, such as random access memory (RAM), cache memory), persistent storage (e.g., a hard disk, an optical drive such as a compact disk (CD) drive or digital versatile disk (DVD) drive, a flash memory, etc.), a communication interface (e.g., Bluetooth interface, infrared interface, network interface, optical interface, etc.), and numerous other elements and functionalities. It is further envisioned that software instructions in a form of computer readable program code to perform embodiments of the disclosure may be stored, in whole or in part, temporarily or permanently, on a non-transitory computer readable medium such as a CD, DVD, storage device, a diskette, a tape, flash memory, physical memory, or any other computer readable storage medium. For example, the software instructions may correspond to computer readable program code that, when executed by a processor(s), is configured to perform one or more embodiments of the disclosure.

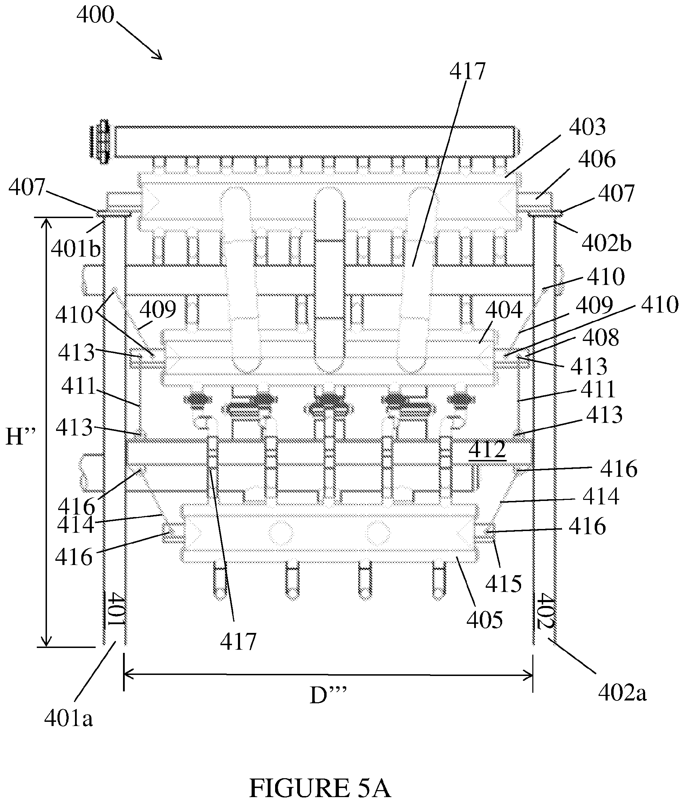

Turning to Figure 5A, Figure 5A shows an example of a hanger heat exchanger system in accordance with one or more embodiments. The following example is for explanatory purposes only and not intended to limit the scope of the invention. A heat exchanger system 400, as shown in Figure 5A, may be used in any industrial application such as power generation. In some embodiments, the heat exchanger system 400 may be used in any industrial applications requiring heat exchangers.

In one or more embodiments, the heat exchanger system 400 may have a top-down configuration to allow for easier to installation in the field. A rigid frame may include two columns 401, 402 spaced a distance D‴ from each other. The two columns 401, 402 may be made from a metal material and extend upward a height H". A first end 401a, 402a of each column 401, 402 may be removably fixed to a floor at a work site. Additionally, the two columns 401, 402 may be rigid to allow for cranes, trailers, or forklifts to lift the heat exchanger system 400 using the two columns 401, 402 as an anchor point. Between the two columns 401, 402, one or more heat exchangers 403, 404, 405 may be provided in the heat exchanger system 400. While it is noted that three heat exchangers 403, 404, 405 are shown in Figure 5A, this is merely for example purposes only and any number of heat exchangers may be used without departing from the scope of the disclosure. For example, a minor (oxidant stream) section may have two heat exchangers while a major (recycled stream) section may have three heat exchangers. The heat exchangers 403, 404, 405 may be a printed circuit type heat exchanger ("PCHE"), a coil wound type heat exchanger, a micro-tube heat exchanger, a diffusion bonded exchanger using stamped fins in addition to etched plates, plate thin exchangers or any other type heat exchanger. It is further envisioned that the heat exchangers 403, 404, 405 may be replaced with cryogenic or boiler type heat exchangers.

In the configuration of Figure 5A, in one or more embodiments, the heat exchangers 403, 404, 405 may be arranged in series and arrayed vertically. A first heat exchanger 403 may be at a vertical-most position in the heat exchanger system 400. In a non-limiting example, the first heat exchanger 403 may be coupled to a first support structure 406. The first support structure 406 may be a rigid metal plate coupled at a second end 401b, 402b of each column 401, 402. Additionally, a plate or cap 407 may be provided on the second end 401b, 402b of each column 401, 402 for the first support structure 406 to be movably connected thereof. In addition, a portion of the first heat exchanger 403 may extend past the height H" of the two columns 401, 402.

A second heat exchanger 404 may be positioned below the first heat exchanger 403. The second heat exchanger 404 may be coupled to a second support structure 408. The second support structure 408 may be a rigid metal plate for the second heat exchanger 404 to be coupled thereof. A first set of tethers 409 may hang the second support structure 408 from the two columns 401, 402. The first set of tethers 409 may include two or more tethers. In a non-limiting example, the first set of tethers 409 may be angled at an angle to center the second support structure 408 between the two columns 401, 402. The first set of tethers 409 may be a tension member, a steel rod, chain links, a wire rope, or any type of rod or bar to support a weight and movement of the second heat exchanger 404. Further, ends 410 of the first set of tethers 409 may be a connection point for the first set of tethers 409 on the two rods 401, 402 and the second support structure 408. In some embodiments, the connection point may be a variable position by means of a rack and pinion or a gear driven cam to allow the first set of tethers 409 to be repositioned. The means of the rack and pinion or the gear driven cam, the connection point may be adjusted to allow for active control to directly move the second heat exchanger 404 and a third heat exchanger 405.

From the second support structure 408, a second set of tethers 411 may extend vertically downward to hang a support beam 412. The second set of tethers 411 may include two or more tethers. Ends 413 of the second set of tethers 411 may be a connection point for the second set of tethers 411 on the second support structure 408 and the support beam 412. In some embodiments, the connection point may be variable position by means of a rack and pinion or a gear driven cam to allow the second set of tethers 411 to be repositioned. The means of the rack and pinion or the gear driven cam, the connection point may be adjusted to allow for active control to directly move the third heat exchanger 405. The second set of tethers 411 may be a tension member, a steel rod, chain links, a wire rope, or any type of rod or bar to support a weight and movement of the support beam 412.

In one or more embodiments, the third heat exchanger 405 may be positioned near the first ends 401a, 402a of the two columns 401, 402 and below the second heat exchanger 404. The third heat exchanger 405 may be coupled to a third support structure 415. The third support structure 415 may be a rigid metal plate for the third heat exchanger 405 to be coupled thereof.

From the support beam 412, a third set of tethers 414 may extend downward to hang the third support structure 415. The third set of tethers 414 may include two or more tethers. In a non-limiting example, the third set of tethers 414 may be angled at an angle to center the third support structure 415 between the two columns 401, 402. In some embodiments, ends 416 of the third set of tethers 414 may be a connection point for the third set of tethers 414 on the support beam 412 and the third support structure 415. In a non-limiting example, the connection point may be variable position by means of a rack and pinion or a gear driven cam to allow the third set of tethers 414 to be repositioned. The means of the rack and pinion or the gear driven cam, the connection point may be adjusted to allow for active control to directly move the third heat exchanger 405. The third set of tethers 414 may be a tension member, a steel rod, chain links, a wire rope, or any type of rod or bar to support a weight and movement of the third heat exchanger 405.

Still referring to Figure 5A, the first heat exchanger 403 may operate at a highest temperature of the three heat exchangers 403, 404, 405 in the heat exchanger system 400. The third heat exchanger 405 may operate at a coldest temperature of the three heat exchangers 403, 404, 405 in the heat exchanger system 400. The second heat exchanger 404 may operate at a temperature between the temperatures of the first heat exchanger 403 and the third heat exchanger 405. With the first heat exchanger 403 positioned at an uppermost level in the heat exchanger system 400, the first heat exchanger 403 may expand without any movement restrictions such the second heat exchanger 404 and the third heat exchanger 405 may also move. Additionally, since the second heat exchanger 404 and the third heat exchanger 405 operate at lower temperature than the first heat exchanger 403, the second heat exchanger 404 and the third heat exchanger 405 may have a higher allowable stress than the first heat exchanger 403. Therefore, a movement of the the second heat exchanger 404 and the third heat exchanger 405 may be easier to accommodate than a movement of the first heat exchanger 403. Additionally, any thermal expansion of tubing 417 interconnected between the three heat exchangers 403, 405, 405 may be compensated by the sets of tethers 409, 411, 414.

In one or more embodiments, the three heat exchangers 403, 405, 405 are thermally decoupled within the heat exchanger system 400. By having the first heat exchanger 403 coupled to the first support structure 406 at the vertical-most position, the first heat exchanger 403 may thermally expand independently without affecting the second heat exchanger 404 and the third heat exchanger 405. In addition, the first set of tethers 409 may allow for the second heat exchanger 404 to be thermally decoupled from the first heat exchanger 403. As the second heat exchanger 404 thermally expands, the first set of tethers 409 may vertically move the second support structure 408 such that the second heat exchanger 404 is thermally independent from the first heat exchanger 403 and the third heat exchanger 405. Further, by having the support beam 412 hanging from the second set of tethers 411, the support beam 412 may thermally decoupled the second heat exchanger 404 and the third heat exchanger 405 from each other.

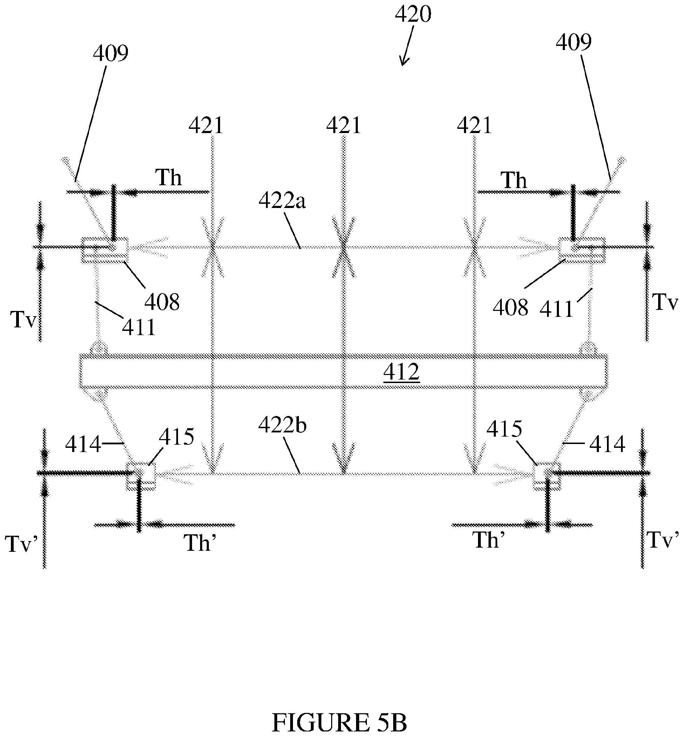

Now referring to Figure 5B, Figure 5B shows an example of a heat exchanger hanger system 420 for the heat exchanger system (see 400) of Figure 1A accordance with one or more embodiments. The following example is for explanatory purposes only and not intended to limit the scope of the invention. The heat exchanger hanger system 420 may include the first set of tethers 409, the second set of tethers 411, and the third set of tethers 414 connected to the second support structure 408, the support beam 412, and the third support structure 415.

In one or more embodiments, the first heat exchanger (see 403) may be vertically coupled while the second heat exchanger (see 404) and the third heat exchanger (see 405) may be supported by the second support structure 408 and the third support structure 415, respectively. Therefore, the second heat exchanger (see 404) and the third heat exchanger (see 405) may experience vertical displacement as a result of thermal expansion of 403, as well as their own thermal expansion in operation.

As showing in Figure 5B, arrows 421 represent a vertical displacement of the second heat exchanger (see 404) and the third heat exchanger (see 405). Additionally, arrows 422a, 422b represent a horizontal thermal expansion of the second heat exchanger (see 404) and the third heat exchanger (see 405). In a non-limiting example, when the second heat exchanger (see 404) is thermally expanding in horizontal direction (Arrow 422a), the first set of tethers 409 may move a distance Th in a horizontal plane. This movement distance Th additionally changes an angle of the first set of tethers 409 to then lower the second heat exchanger (see 404) a distance Tv due to the angle change. As the second heat exchanger (see 404) lower the distance Tv, the third heat exchanger (see 405) may also lower the distance Tv. However, when the third heat exchanger (see 405) thermally expands in horizontal direction (Arrow 422b), the second set of tethers 411 may move a distance Th' in the horizontal plane to change an angle of the second set of tethers 411. With the angle change of the second set of tethers 411, the third heat exchanger (see 405) moves an additional amount lower such that a distance Tv' vertically moved by the third heat exchanger (see 405) may be the total of the distance Tv and the additional amount lowered.

With the heat exchanger hanger system 420, both horizontal and vertical thermal expansion in various components in the heat exchanger system (see 400) may change or tune angles of the set of tethers 409, 411, 414 to compensate thermal expansion. By compensating for thermal expansion, thermal imbalances from various components cooling and heating at different rates may be managed by the heat exchanger hanger system 420. The heat exchanger hanger system 420 further minimize expansion stresses arising from thermal expansion of heat exchangers and interconnecting pipework in the heat exchanger system (see 400). It is further envisioned that insulation may be used in conjunction with the heat exchanger hanger system 420 to further aid in managing in thermal imbalances. The insulation may be used to prevent heat loss, and to improve system efficiency, which may also have a benefit of helping to manage the thermal balance and result in more accurate predictions of displacements from thermal expansion.

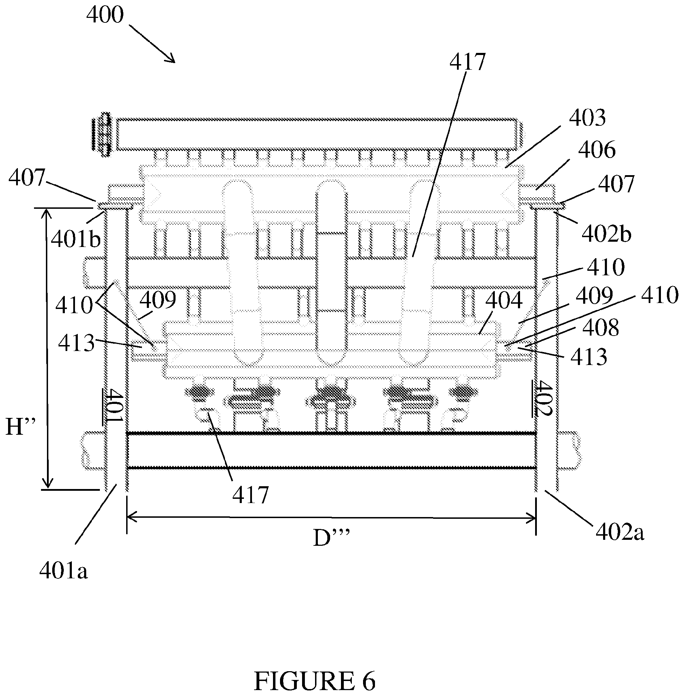

Referring now to Figure 6, another embodiment of a heat exchanger system according to embodiments herein is illustrated, where like numerals represent like parts. The embodiment of Figure 6 is similar to that of the embodiment of Figure 5A. However, the heat exchanger system 400 may only have the first heat exchanger 403 and the second heat exchanger 404 without a third heat exchanger (see 405 in Figure 5A).

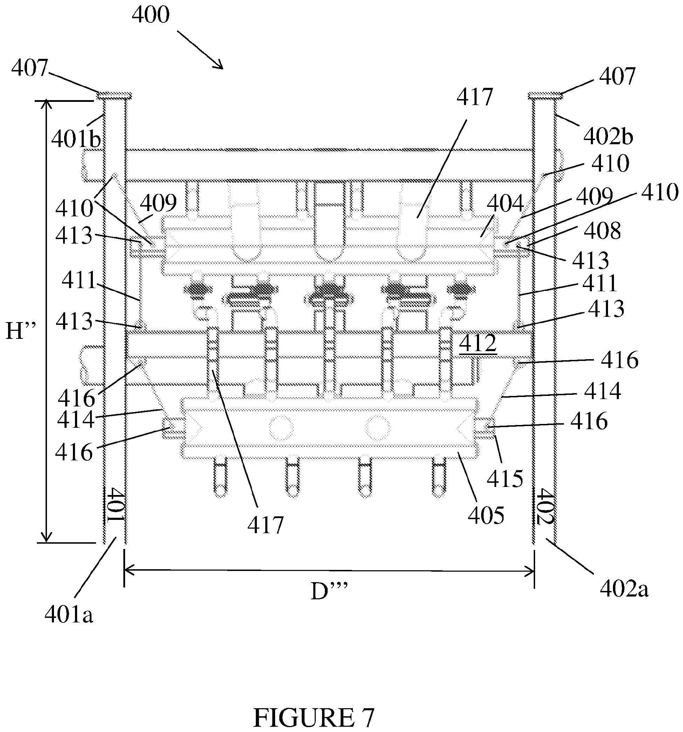

Referring now to Figure 7, another embodiment of a heat exchanger system according to embodiments herein is illustrated, where like numerals represent like parts. The embodiment of Figure 7 is similar to that of the embodiment of Figure 5A. However, the heat exchanger system 400 may only have two heat exchangers both hanging from the heat exchanger hanger system (see 420 in Figure 5B). In a non-limiting example, the first heat exchanger 403 may be removed such that the second heat exchanger 404 and the third heat exchanger 405, hanging from their respective the set of tethers (409, 414), remain.

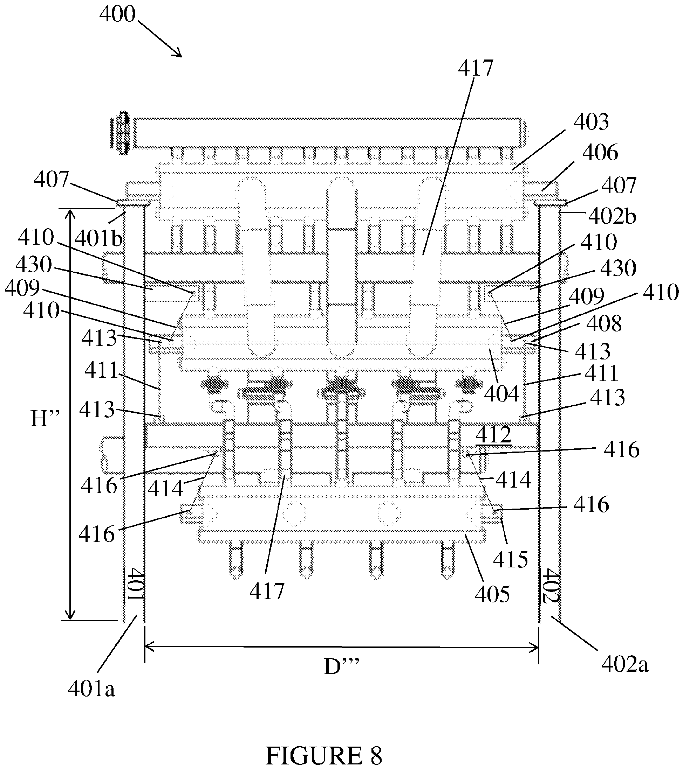

Referring now to Figure 8, another embodiment of a heat exchanger system according to embodiments herein is illustrated, where like numerals represent like parts. The embodiment of Figure 8 is similar to that of the embodiment of Figure 5A. However, instead of the first set of tethers 409 and the third set of tethers 414 (see Figure 5A) being angled outwardly, the first set of tethers 409 may be angled inward. In a non-limiting example, one or more protrusions 430 may extend inward from the rigid frame (the two columns 401, 402) such that one end 410 of the first set of tethers 409 may be a connection point on the one or more protrusions 430. By angling the first set of tethers 409 inward, the thermal expansion of the second heat exchanger 404 may cause the second support structure 408 to raise vertically upward. Additionally, the third set of tethers 414 may also be angled inward to cause the third support structure 415 to raise vertically upward based on the thermal expansion of the third heat exchanger 405.

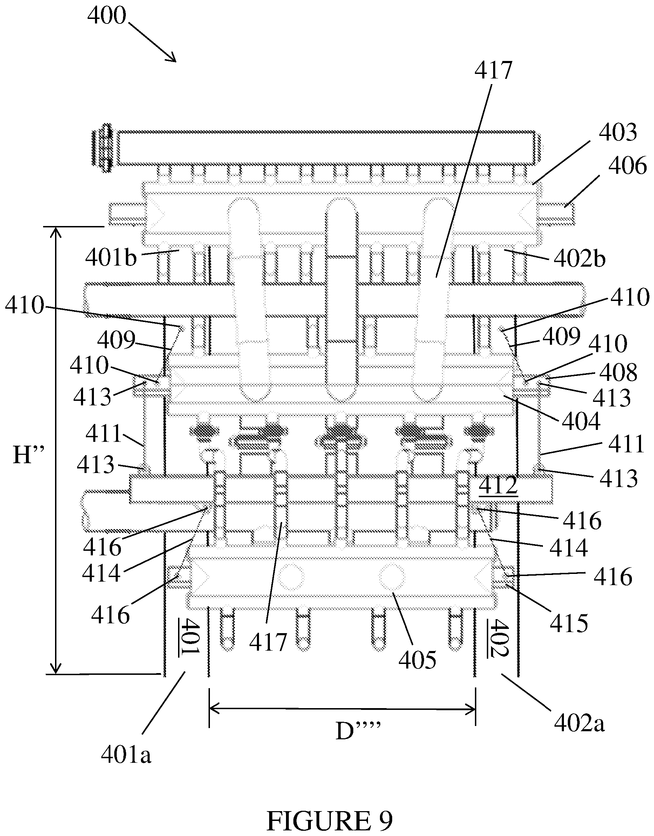

Referring now to Figure 9, another embodiment of a heat exchanger system according to embodiments herein is illustrated, where like numerals represent like parts. The embodiment of Figure 9 is similar to that of the embodiment of Figure 5A. However, the two columns 401, 402 of the rigid frame may be moved closer together such that a distance Dʺʺ between the two columns 401, 402 is less than the distance D"'. By moving the two columns 401, 402 closer together, the first set of tethers 409 may be angled inward. By angling the first set of tethers 409 inward, the thermal expansion of the second heat exchanger 404 may cause the second support structure 408 to raise vertically upward. Additionally, the third set of tethers 414 may also be angled inward to cause the third support structure 415 to raise vertically upward the based on the thermal expansion of the third heat exchanger 405.

As described in Figures 5A-9, the heat exchanger systems 400 connects a series of independently moving parts. The heat exchanger systems 400 described herein allows for the series of independently moving parts to be connected while accounting for the independent movement and providing advantages in the overall system, including low stress on the heat exchangers (404, 405) to piping nozzles (417), for example. For the heat exchanger systems 400 in Figures 5A-9, the heat exchanger hanger system (420) may have a system of tethers 409, 411, 414 may be configured to adjust a position (i.e., neutral, raising, lowering) of the lower heat exchangers (404, 405). In one or more embodiments, the configuration of the system of tethers 409, 411, 414 may be based on an expected thermal expansion or contraction of the components during startup, operation, and shut down of the heat exchanger systems 400. In addition, an angle of the tethers may be selected based on the expected thermal expansion or contraction. Further, each angle of the tethers may be independently tuned.

In the heat exchanger systems 400, the support bar 412 may enhance the independent movement of the heat exchangers (404, 405). With inclusion of the support bar 412, the second heat exchanger 404 does not impact an ability of the third heat exchanger 405 to independently move. Thus, the support bar 412 provides various degrees of freedom to accommodate pipe movement and expansion within the heat exchanger systems 400. The support bar 412 allows one to isolate and use expansion methods to advantageously decouple the thermal expansion of each heat exchangers to minimize load on nozzles and may allow shorter expansion piping lengths. By minimizing the load and allowing shorter piping, an overall weight of unit may be reduced. Additionally, stresses associated with the heat exchanger hanger system (420), allows various piping to be decreased in length and to allow the overall system to become more compact.

The following items reflect further embodiments of the present disclosure which can be combined with any of the embodiments described above:
Item 1. A system, comprising:
   a turbine; and
   a recuperative heat exchanger system, wherein the recuperative heat exchanger system is configured to receive exhaust gases from the turbine, and the recuperative heat exchanger system comprises:
      a precool section to cool the exhaust gases,
      a major heating section to receive the cooled the exhaust gases, and
      a minor heating section to receive the cooled the exhaust gases.
Item 2. The system of item 1, wherein the precool section further comprises one or more shell and tube heat exchangers with an annular distributor, and wherein the system is configured such that a fluid exiting an end of the minor heating section enters the precool section.
Item 3. The system of item 1, wherein the major heating section operates at a higher temperature then the minor heating section.
Item 4. The system of item 1, wherein the major heating section further comprises at least two heat exchangers in series, and the at least two heat exchangers are a printed circuit type heat exchanger and arrayed vertically.
Item 5. The system of item 1, wherein the minor heating section further comprises at least two heat exchangers in series, and the at least two heat exchangers are a printed circuit type heat exchanger and arrayed vertically stacked.
Item 6. The system of item 1, wherein the recuperative heat exchanger system further comprises a heat recovery section configured to add heat to the recycle heating section.
Item 7. The system of item 1, wherein the major heating section is a recycle heating section and the minor heating section is an oxidant heating section.
Item 8. The system of item 1, further comprising one or more valves configured to balance a flow between the major heating section and the minor heating section.
Item 9. The system of item 1, further comprising a manifold configured to split a flow from the precool section to the major heating section and the minor heating section.
Item 10. A method, comprising:
   producing exhaust gas via a turbine;
   feeding the exhaust gas into a precool section of a recuperative heat exchanger system to cool the exhaust gas;
   splitting the cooled exhaust gas into a major flow path feeding into a major heating section of the recuperative heat exchanger system and a minor flow path feeding into a minor heating section of the recuperative heat exchanger system;
   flowing, in the minor flow path the cooled exhaust gas through a first minor heat exchanger of the minor heating section and a second minor heat exchanger of the minor heating section;
   flowing, in the major flow path the cooled exhaust gas through a first major heat exchanger of the major heating section, a second major heat exchanger of the major heating section, and a third major heat exchanger of the major heating section; and providing a combustor, coupled to the turbine, with fluid flow from the major flow path and the minor flow path.
Item 11. The method of item 10, further comprising cooling the exhaust gas in the precool section to a temperature of 575°C.
Item 12. The method of item 10, further comprising heating the minor flow path to a temperature of 350 - 500°C.
Item 13. The method of item 10, further comprising heating the major flow path to a temperature of 520 - 650°C.
Item 14. The method of item 10, further comprising adding heat to the major flow path via a heat source.
Item 15. The method of item 10, further comprising balancing the splitting of the cooled exhaust gas into the major flow path and the minor flow path with one or more valves.
Item 16. A precool heat exchanger, comprising:
   a first annular shell forming a pressure boundary, the first annular shell comprises:
   an exhaust gas inlet configured to receive exhaust gas from a turbine, and
   one or more exhaust outlets configured to exhaust the exhaust gas,
   a second annular shell provided within the first annular shell;
   a tube bundle provided within the second annular shell; and
   an annular distribution device provided within the second annular shell, wherein the annular distribution device is configured to control an exhaust gas flow entering the tube bundle.
Item 17. The precool heat exchanger of item 16, wherein the tube bundle is a U-tube bundle.
Item 18. The precool heat exchanger of item 17, further comprising a support plate within the first annular shell configured to support a weight of the U-tube bundle.
Item 19. The precool heat exchanger of item 16, further comprising a stationary head channel at an end of the first annular shell, the stationary head channel comprises an inlet configured to receive oxidant from a minor heating section; and an outlet configured to exit the oxidant.
Item 20. The precool heat exchanger of item 19, wherein the stationary head channel further comprises a pass partition configured to split flow between the inlet and the outlet.
Item 21. A recuperative heat exchanger system, comprising:
   a precool section within a first rigid framework, wherein the precool section comprises one or more heat exchangers to receive and cool exhaust gases;
   a minor section within a third rigid framework, wherein the minor section comprises a first minor heat exchanger and a second minor heat exchanger; and
   a first major section within a second rigid framework, wherein the first major section comprises a first major heat exchanger, a second major heat exchanger, and a third major heat exchanger.
Item 22. The recuperative heat exchanger system of item 21, further comprising a manifold configured to split a cooled exhaust gas flow from the precool section to the first major section and the minor section.
Item 23. The recuperative heat exchanger system of item 22, wherein the manifold is positioned in a space between the first rigid framework and the second rigid framework and the third rigid framework.
Item 24. The recuperative heat exchanger system of item 21, further comprising a second major section within a fourth rigid framework, wherein the second major section comprises a fourth major heat exchanger, a fifth major heat exchanger, and a sixth major heat exchange.
Item 25. The recuperative heat exchanger system of item 24, further comprising one or more valves to balance a split of the cooled exhaust gas flow to the first major section, the second major section, and the minor section.
Item 26. The recuperative heat exchanger system of item 24, further comprising a heat recovery section connected to the first major section and the second major section.
Item 27. The recuperative heat exchanger system of item 24, wherein each of the first rigid framework, the second rigid framework, the third rigid framework, and the fourth rigid framework are formed by a plurality of vertically oriented structural members and a plurality of horizontally oriented structural members interconnected together.
Item 28. The recuperative heat exchanger system of item 21, wherein the one or more shell and tube heat exchangers comprises precooler inlets on a shell-side to receive the exhaust gases.
Item 29. The recuperative heat exchanger system of item 21, further comprising a first recycled CO2 manifold to provide recycled CO2 within the recuperative heat exchanger system.
Item 30. The recuperative heat exchanger system of item 29, further comprising a second recycled CO2 manifold to exit the recycled CO2 within the recuperative heat exchanger system.
Item 31. The recuperative heat exchanger system of item 21, wherein the one or more shell and tube heat exchangers comprises oxidant inlets on a tube-side to receive oxidant from the minor section.
Item 32. The recuperative heat exchanger system of item 21, wherein the one or more shell and tube heat exchangers comprises oxidant inlets on a tube-side to receive oxidant from the minor section.
Item 33. A method, comprising:
   cooling exhaust gases with a precool section within a first rigid framework;
   splitting the exhaust gases, with a manifold positioned outside of the first rigid framework, to flow into a first major section within a second rigid framework, a second major section within a third rigid framework, and a minor section within a third rigid framework;
   flowing the exhaust gases, in the minor section, through a first minor heat exchanger of the minor section and to a second minor heat exchanger of the minor section via one or more curved flow loops;
   flowing the exhaust gases, in the first major section, through a first major heat exchanger of the first major section and to a second major heat exchanger of the first major section and then a third major heat exchanger of the first major section via one or more curved flow loops;
   flowing the exhaust gases, in the second major section, through a first major heat exchanger of the second major section and to a second major heat exchanger of the second major section and then a third major heat exchanger of the second major section via one or more curved flow loops;
   flowing the exhaust gases from the second minor heat exchanger, the third major heat exchanger of the first major section, and the third major heat exchanger of the second major section to an exhaust gas manifold via secondary curved flow loops.
Item 34. The method of item 33, further comprising operating the first minor heat exchanger at a higher temperature than the second minor heat exchanger.
Item 35. The method of item 33, further comprising operating the first major heat exchanger of the first major section at a higher temperature than the second major heat exchanger of the first major section, and operating the second major heat exchanger of the first major section at a higher temperature than third major heat exchanger of the first major section.
Item 36. The method of item 33, further comprising operating the first major heat exchanger of the second major section at a higher temperature than the second major heat exchanger of the second major section, and operating the second major heat exchanger of the second major section at a higher temperature than third major heat exchanger of the second major section.
Item 37. The method of item 33, further comprising distributing recycled CO2, via a first recycled CO2 manifold, to the first major section and the second major section.
Item 38. The method of item 37, further comprising heating the recycled CO2 with the first major section and the second major section and exiting the heated recycled CO2 with a second recycled CO2 manifold.
Item 39. The method of item 33, further comprising providing oxidant to the precool section via an oxidant manifold.
Item 40. The method of item 33, further comprising providing heat to the first major section and the second major section via a heat recovery section.
Item 41. A heat exchanger system, comprising:
   a rigid framework;
   a first heat exchanger coupled to a first support structure on a top of the rigid framework;
   a second heat exchanger positioned below the first heat exchanger, wherein the second heat exchanger is coupled to a second support structure, the second support structure hanging from the rigid framework via a first set of tethers, wherein the first set of tethers is configured to vertically and horizontally move the second support structure;
   a second set of tethers connected to the second support structure and extend downward to hang a support beam;
   a third set of tethers connected to the support beam and extend downward to hang a third support structure, wherein the third set of tethers is configured to vertically and horizontally move the third support structure; and
   a third heat exchanger coupled to the third support structure,
   wherein the vertically and horizontally movement of the second support structure is based on a thermal expansion of the second heat exchanger, and
   wherein the vertically and horizontally movement of the third support structure is based on a thermal expansion of the third heat exchanger.
Item 42. The heat exchanger system of item 41, wherein the first heat exchanger is configured to operate at a higher temperature than the second heat exchanger, and the second heat exchanger is configured to operate at a higher temperature than the third heat exchanger.
Item 43. The heat exchanger system of item 41, wherein the first set of tethers, the second set of tethers, and the third set of tethers are selected from a structural tension member, a steel rod, chain links, or a wire rope.
Item 44. The heat exchanger system of item 41, wherein the first set of tethers and the third set of tethers are angled.
Item 45. The heat exchanger system of item 41, wherein the rigid framework comprises two columns spaced a distance from each other.
Item 46. The heat exchanger system of item 45, wherein the first heat exchanger, the second heat exchanger, and the third heat exchanger are between the two columns.
Item 47. The heat exchanger system of item 45, wherein a first end of each of the two columns is removably fixed to a floor.
Item 48. The heat exchanger system of item 47, wherein the first support structure is movably coupled to a second end of each of the two columns distal to the first end.
Item 49. The heat exchanger system of item 41, further comprising one or more protrusions extending from the rigid framework, wherein an end of the first set of tethers is connected to the one or more protrusions.
Item 50. The heat exchanger system of item 41, wherein the first heat exchanger is thermally decoupled from the second heat exchanger, and the second heat exchanger is thermally decoupled from the third heat exchanger.
Item 51. A heat exchanger system, comprising:
   a rigid framework;
   a first heat exchanger coupled to a first support structure on a top of the rigid framework; and
   a second heat exchanger positioned below the first heat exchanger, wherein the second heat exchanger is coupled to a second support structure, the second support structure hanging from the rigid framework via a first set of tethers, wherein the first set of tethers is configured to vertically and horizontally move the second support structure,
   wherein the vertically and horizontally movement of the second support structure is based on a thermal expansion of the second heat exchanger.
Item 52. The heat exchanger system of item 51, wherein the first heat exchanger is thermally decoupled from the second heat exchanger.
Item 53. The heat exchanger system of item 51, wherein the first set of tethers is angled.
Item 54. The heat exchanger system of item 53, wherein ends of the first set of tethers are connected to the rigid framework and the second support structure via a rack and pinion or a gear driven cam.
Item 55. The heat exchanger system of item 53, wherein an angle of the first set of tethers is selected based on a predetermined thermal expansion or contraction.
Item 56. The heat exchanger system of item 51, wherein the first heat exchanger is configured to operate at a higher temperature than the second heat exchanger.
Item 57. A heat exchanger system, comprising:
   a rigid framework;
   a first support structure hanging from the rigid framework via a first set of tethers having one end coupled to the rigid framework and another end coupled to the first support structure, wherein the first set of tethers is configured to vertically and horizontally move the first support structure;
   a first heat exchanger coupled to the first support structure;
   a second set of tethers connected to the first support structure and extend downward to hang a support beam;
   a third set of tethers connected to the support beam and extend downward to hang a second support structure, wherein the third set of tethers is configured to vertically and horizontally move the second support structure; and
   a second heat exchanger coupled to the second support structure,
   wherein the vertically and horizontally movement of the first support structure is based on a thermal expansion of the first heat exchanger, and
   wherein the vertically and horizontally movement of the second support structure is based on a thermal expansion of the second heat exchanger.
Item 58. The heat exchanger system of item 57, wherein the first heat exchanger is thermally decoupled from the second heat exchanger.
Item 59. The heat exchanger system of item 57, wherein the first set of tethers and the third set of tethers are angled.
Item 60. The heat exchanger system of item 57, wherein the first heat exchanger is configured to operate at a higher temperature than the second heat exchanger.

## Claims

1. A system (100), comprising:
a turbine (101); and
a recuperative heat exchanger system (105), wherein the recuperative heat exchanger system (105) is configured to receive exhaust gases (104) from the turbine (101), and the recuperative heat exchanger system (105) comprises:
a precool section (200) configured to receive and to cool all of the exhaust gases (104) from the turbine (101) and to output a flow of cooled exhaust gases (104),
a major heating section (301), and
a minor heating section (302) arranged in parallel with the major heating section (301),
wherein the recuperative heat exchanger system (105) is configured to split the flow of all of the cooled exhaust gases from the at least one precool section (200) between the major heating section (301) and the minor heating section (302),
wherein the precool section (200) is further configured to heat an oxidant stream received from the minor heating section (302) against all of the exhaust gases (104) from the turbine (101) to cool all of the exhaust gases (104), and
wherein a temperature of the heated oxidant stream is greater than a temperature of a recycle flow from the major heating section (301).

2. The system (100) of claim 1, wherein the precool section (200) further comprises one or more heat exchangers, optionally one or more shell and tube heat exchangers, which are configured to receive the oxidant stream from the minor heating section (302), and optionally to receive all of the exhaust gases (104) from the turbine (101) to cool all of the exhaust gases.

3. The system (100) of any one of the preceding claims, wherein the major heating section (301) further comprises at least two heat exchangers in series, and the at least two heat exchangers are a printed circuit type heat exchanger and arrayed vertically.

4. The system (100) of any one of the preceding claims, wherein the minor heating section (302) further comprises at least two heat exchangers in series, and the at least two heat exchangers are a printed circuit type heat exchanger (PCHE) and arrayed vertically stacked.

5. The system (100) of any one of the preceding claims, wherein the recuperative heat exchanger system (105) further comprises a heat recovery section (107) configured to add heat to the major heating section (301).

6. The system (100) of any of the preceding claims, wherein the major heating section (301) is a heat exchange section for the recycle flow and the minor heating section (302) is a heat exchange section for the oxidant stream.

7. The system (100) of any one of the preceding claims, further comprising a manifold (205) configured to receive all of the cooled exhaust gases (104) from the precool section (200) and to split the flow of all of the cooled exhaust gases (104) from the precool section (200) between the major heating section (301) and the minor heating section (302).

8. The system (100) of any one of the preceding claims, further comprising the manifold (205), which is positioned between the precool section (200), the major heating section (301), and the minor heating section (302), the manifold (205) being configured to receive all of the cooled exhaust gases (104) directly from the precool section (200) and to split the flow from the precool section (200) to the major heating section (301) and the minor heating section (302).

9. The system (100) of any one of the preceding claims, wherein both the major heating section (301) and the minor heating section (302) includes a respective at least two exchangers vertically stacked on each other to form a vertically modular heat exchanger stack.

10. A system (100), comprising:
a turbine (101) configured to output exhaust gases (104);
a combustor (103) in communication with the turbine (101); and
a recuperative heat exchanger system (105) in communication with the turbine (101),
the recuperative heat exchanger system (105) including:
a precool section (200),
a major heating section (301), and
a minor heating section (302),
wherein the precool section (200) is configured to receive and to cool all of the exhaust gases (104) from the turbine (101) against an oxidant flow output from the minor heating section (302) and to output a flow of cooled exhaust gases (104),
wherein the major heating section (301) is configured to receive a first portion of the flow of cooled exhaust gases (104) output from the precool section (200), and the minor heating section (302) is configured to receive a second portion of the flow of cooled exhaust gases (104) output from the precool section (200), an amount of the first portion being different than an amount of the second portion, and
wherein the oxidant flow output from the minor heating section (302) and a recycle flow output from the major heating section (301) are provided separately to the combustor.

11. The system (100) of claim 10, wherein the first portion is greater than the second portion, and wherein a sum of the first portion and the second portion is an entirety of the flow of cooled exhaust gases (104).

12. The system (100) of claim 10 or 11, wherein the first portion of the cooled exhaust gases (104) is between and including 51% to 90% of a total flow of the cooled exhaust gases (104), or
the first portion of the cooled exhaust gases (104) is 75 % of a total flow of the cooled exhaust gases (104).

13. The system (100) of any one of claims 10 to 12, further comprising a manifold (205), which is in fluid communication with the precool section (200), the major heating section (301), and the minor heating section (302), wherein the manifold (205) is configured to split the flow from all of the cooled exhaust gases (104) between the major heating section (301) and the minor heating section (302).
